# FASCICULE DE BREVET EUROPEEN

(11) **EP 2 756 535 B1**
(45) Date de publication et mention de la délivrance du brevet: **09.09.2015**
(21) Numéro de dépôt: 12756764.2
(22) Date de dépôt: 13.09.2012
(51) Int. Cl.: H01M 10/42, H01M 10/04, H01M 10/0525, H01M 6/48, H01M 6/50, G01M 3/26, H01G 11/14, H01G 11/80, H01M 4/04, H01M 4/02

(54) **PROCÉDÉ DE TEST D'ÉTANCHÉITÉ D'UNE STRUCTURE BIPOLAIRE POUR GÉNÉRATEUR ÉLECTROCHIMIQUE**
VERFAHREN ZUR BEWERTUNG DER ABDICHTUNG EINER BIPOLAREN STRUKTUR FÜR EINEN ELEKTROCHEMISCHEN GENERATOR
METHOD FOR EVALUATING THE SEALING OF A BIPOLAR STRUCTURE FOR AN ELECTROCHEMICAL GENERATOR

(30) Priorité: 15.09.2011 FR 1158214
(43) Date de publication de la demande: 23.07.2014
(73) Titulaire: Commissariat à l'Énergie Atomique et aux Énergies Alternatives, 75015 Paris (FR)
(72) Inventeur: CHAMI, Marianne, F-38600 Fontaine (FR); MARTINET, Sébastien, F-38210 Saint Quentin / Isère (FR); ROUILLON, Ludovic, F-38250 Villard de Lans (FR)
(74) Mandataire: Ahner, Philippe
(86) Numéro de dépôt international: PCT/EP2012/068001
(87) Numéro de publication internationale: WO 2013/037917

(56) Documents cités:
- FR-A1- 2 927 472
- US-A- 5 930 108
- US-A1- 2005 069 768
- US-A1- 2011 128 666
- Jürgen Steck: "Definition of Leak Rate (LR) - Leak Rate according to DIN EN 1330-08", , 9 octobre 2012 (2012-10-09), pages 1-1, XP55040382, Königstrassse 2, 26676 Harkebrügge, Germany Extrait de l'Internet: URL:http://www.prosensys.com/pdfs/leak-rat e_definition.pdf [extrait le 2012-10-09]

## Description

### DOMAINE TECHNIQUE

La présente invention se rapporte au domaine des générateurs électrochimiques, de préférence les piles et les accumulateurs au lithium, dont l'empilement comporte au moins une structure bipolaire, habituellement dénommée « électrode bipolaire ».

Ce type de générateur électrochimique fonctionne sur le principe d'insertion ou de désinsertion (ou intercalation-désintercalation) de lithium sur au moins une électrode.

En effet, la réaction électrochimique à l'origine de la production de courant met en jeu le transfert de cations lithium, par l'intermédiaire d'un électrolyte conducteur d'ions lithium, lesdits cations provenant d'une électrode négative venant soit s'intercaler dans le réseau accepteur de l'électrode positive, soit réalimenter l'électrolyte en ions lithium.

Ces générateurs électrochimiques trouvent leur application dans de nombreux domaines techniques, notamment dans l'alimentation des systèmes embarqués de faible épaisseur, comme les cartes de crédit, les étiquettes intelligentes, dans l'alimentation des téléphones mobiles, ou encore dans l'alimentation des véhicules électriques.

L'invention s'applique également au domaine des super-condensateurs électrochimiques dont au moins l'une des deux électrodes fonctionne par des réactions d'adsorption.

### ETAT DE LA TECHNIQUE ANTERIEURE

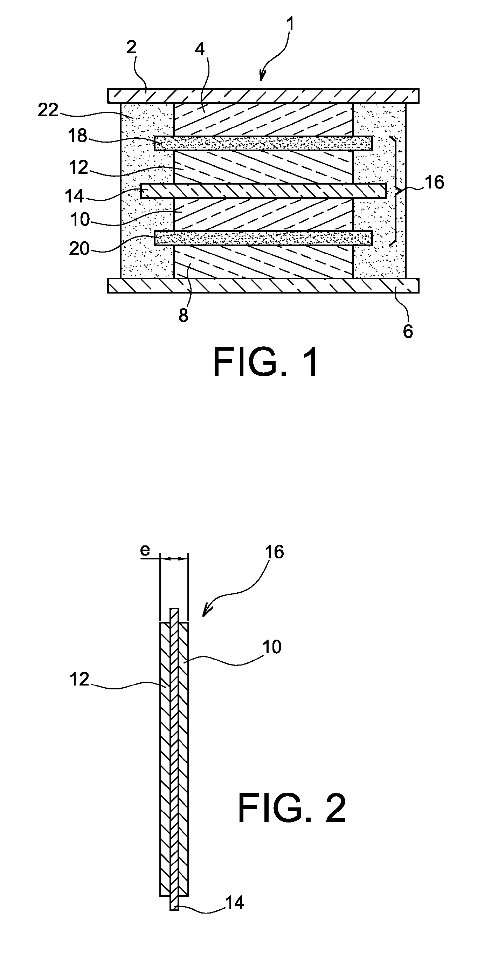

En référence aux figures 1 et 2, il est représenté un générateur électrochimique 1 au lithium formé par un empilement d'éléments qui vont être décrits ci-dessous.

Le générateur comporte tout d'abord une électrode positive à l'extrémité haute de l'empilement, cette électrode comprenant un substrat conducteur en aluminium 2 et une couche active positive 4 à base de Li_{1,04}Mn_{1,96}O₄, de LiFePO₄, ou de tout autre matériau d'insertion du lithium. De manière analogue, il est prévu une électrode négative à l'extrémité basse de l'empilement, cette électrode comprenant un substrat conducteur en aluminium 6 et une couche active négative 8 à base de Li₄Ti₅O₁₂.

Ces deux électrodes d'extrémité enserrent une ou plusieurs structures bipolaires, également dénommées électrodes bipolaires, chacune comprenant une couche active positive 10 et une couche active négative 12 de part et d'autre d'un substrat commun conducteur en aluminium 14, réalisé d'une seule pièce ou sous la forme de deux substrats superposés, tel que cela est décrit dans le document WO 03/047021. D'une manière plus générale, chaque structure bipolaire 16 comporte le substrat 14 en forme de feuille formant collecteur de courant de la structure, ainsi que les deux électrodes 10, 12 en forme de couches respectivement agencées sur les surfaces opposées du substrat.

Chaque couche active est déposée sur la feuille métallique d'aluminium par enduction sur un substrat métallique d'une encre d'électrode comportant du matériau actif, du conducteur électronique et du polymère, usuellement le polyfluorure de vinylidène lorsque les électrodes sont réalisées par voie organique. Le polymère est dissous dans un solvant, qui est généralement la N-méthyle Pyrollidone. Après évaporation de ce dernier, le polymère, parfaitement dispersé avec les poudres, permet l'accroche des grains de matériaux actifs et de conducteur électronique entre eux et sur le collecteur de courant en aluminium.

De plus, les électrodes agencées aux extrémités de l'empilement sont séparées de l'électrode bipolaire par deux séparateurs microporeux 18, 20, respectivement en contact avec les électrodes 12 et 10 de la structure bipolaire.

Enfin, l'étanchéité de l'ensemble est assurée par un joint 22 généralement à base de polytétrafluoroéthylène (PTFE), éventuellement constitué de plusieurs éléments, et entourant la périphérie de l'empilement.

L'accumulateur montré sur la figure 1 présente donc une pluralité de cellules électrochimiques connectées en série via la/les structures bipolaires. Cela permet d'augmenter la tension moyenne d'un accumulateur Li-ion monopolaire, tout en conservant une densité d'énergie comparable.

L'architecture est ainsi qualifiée de bipolaire, car elle comprend une couche active positive d'une cellule et une couche active négative d'une cellule adjacente qui sont supportées par une même structure à collecteur de courant, qualifiée elle-même d'électrode bipolaire. L'architecture d'un accumulateur bipolaire correspond ainsi à la mise en série interne de plusieurs accumulateurs monopolaires par l'intermédiaire des électrodes ou collecteurs de courant bipolaires, avec notamment l'avantage d'avoir une résistance électrique réduite par rapport à des accumulateurs monopolaires conventionnels reliés en série par des connecteurs extérieurs. A cet égard, il est connu de nombreux brevets et demandes de brevets concernant de telles batteries bipolaires, tels que US2005/0069768, US 7279248, US 7220516, US 7320846, US 7163765, WO 03/047021, WO 2006/061696, US 7097937.

Lorsque l'étanchéité périphérique du générateur électrochimique fait défaut, des éléments visuels majeurs en témoignent, comme une fuite de l'électrolyte liquide, une prise en eau de l'électrolyte pouvant conduire à une corrosion de l'aluminium en commençant par sa périphérie. En revanche, l'étanchéité des structures bipolaires n'est pas décelable visuellement, et aucune technique n'est connue pour la tester.

Cela peut s'avérer problématique, étant donné qu'il existe un risque de court-circuit ionique via le collecteur de courant lui-même, qui peut en effet se retrouver perforé lors de la fabrication des structures bipolaires, et en particulier lors de l'étape de compression des électrodes par calandrage et/ou pressage. Une telle étape est effectivement mise en oeuvre afin d'atteindre les porosités et épaisseurs cibles pour les électrodes sous forme de couches adhérant au collecteur de courant. Elle s'effectue généralement en passant la structure bipolaire entre deux rouleaux compresseurs provoquant son chauffage et son calandrage.

A cet égard, il est rappelé que pour optimiser le fonctionnement de la structure bipolaire, il est nécessaire de compresser ses deux couches formant électrodes sur le substrat, de sorte qu'elles adoptent une porosité optimale, dont la valeur dépend des applications visées pour l'accumulateur (faible pour un accumulateur à haute densité d'énergie, optimisée pour un accumulateur de puissance). La porosité doit être assez grande pour permettre la mouillabilité de l'électrode par l'électrolyte et optimiser la diffusion ionique pendant le cyclage de l'accumulateur. Elle doit également être diminuée au maximum pour améliorer le contact des grains de matériaux entre eux, et optimiser la conduction électrique dans l'électrode jusqu'au collecteur de courant. En général, la porosité des électrodes est optimale entre 25 et 40%, et typiquement autour de 40% pour un bon fonctionnement des électrodes en puissance.

Il est noté que dans le cas d'une batterie bipolaire, un fonctionnement en puissance est généralement préféré.

Le choix d'une porosité plus élevée, par exemple 45%, peut être motivé par la diminution du risque de détérioration de la structure bipolaire lors de son calandrage, ainsi que par la non-altération des performances électrochimiques.

Habituellement, la détection des microfuites est seulement réalisée après l'empilement des éléments de la cellule, et sa mise en fonctionnement. Elle est réalisée par détection de courants ioniques anormaux. Cela implique qu'elle a été entièrement assemblée et activée, et que ses composants non-défectueux ne peuvent plus être récupérés.

De l'art antérieur, il est également connu les documents US 2011/128666 A1 ainsi que le document US 2002/006546 A1.

Le document US 2011/128666 A1 décrit un procédé de test d'étanchéité fonctionnant par mesure d'une différence de pression appliquée à une électrode. Néanmoins, il ne concerne pas une structure bipolaire comprenant un substrat en forme de feuille formant collecteur de courant, ainsi que deux électrodes en forme de couches respectivement agencées sur les surfaces opposées du substrat.

Il en est de même pour le document US 2002/006546 A1 qui porte sur un procédé de test d'étanchéité d'un collecteur de courant de batterie.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un procédé de test d'étanchéité d'une structure bipolaire comprenant un substrat en forme de feuille formant collecteur de courant, ainsi que deux électrodes en forme de couches respectivement agencées sur les surfaces opposées du substrat, le procédé comprenant les étapes suivantes :
- mise en place de la structure bipolaire dans une cavité de manière à délimiter au sein de celle-ci un premier et un second compartiments séparés par cette structure bipolaire dont la périphérie est reliée de manière étanche à la cavité ;
- mise en circulation d'un fluide dans le premier compartiment de la cavité, en direction du second compartiment ; et
- évaluation de l'étanchéité de la structure bipolaire à partir d'une mesure de la différence de pression du fluide dans les premier et second compartiments.

L'invention est ainsi avantageuse en ce qu'elle se révèle extrêmement fiable et simple pour détecter d'éventuelles fuites à travers la structure bipolaire à tester. Cette solution permet par conséquent de tester les composants avant de les introduire au sein d'un empilement bipolaire, de préférence un générateur électrochimique, puis d'évincer les structures bipolaires défectueuses.

En d'autres termes, le principe de l'invention repose sur la mesure de la perméabilité intrinsèque de la structure bipolaire, pour juger de son niveau d'intégrité en termes d'étanchéité. Ce test, en fonction de la valeur de la différence de pression mesurée renseignant sur sa perméabilité, permet ainsi de déterminer si la structure bipolaire peut ou non être intégrée dans un empilement pour constituer une électrode bipolaire étanche, avant l'assemblage, l'activation et la mise en fonctionnement/cyclage.

A titre indicatif, il est noté que la perméabilité d'un milieu poreux ou fissuré caractérise son aptitude à laisser circuler un fluide au sein de son espace. Elle dépend de la structure interne de l'espace poreux ou fissuré, et particulièrement de la forme, connectivité de ses différents éléments, etc. C'est une propriété de transport macroscopique exprimant le rapport entre une force (gradient de pression) imposée à un fluide pour traverser le milieu, et le flux (débit) résultant.

De préférence, il est prévu une grille de support dans le second compartiment, avec la structure bipolaire plaquée contre cette grille. Cela évite les déformations de la structure bipolaire durant le test d'étanchéité.

De préférence, ladite structure bipolaire présente une épaisseur totale comprise entre 10 et 1000 µm, encore plus préférentiellement entre 20 et 500 µm, et plus particulièrement de l'ordre de 125 ± 50 µm.

De préférence, le fluide est de l'air et est introduit dans le premier compartiment avec un débit de l'ordre de 60 à 700 litres/heure.

De préférence, le fluide est de l'air et est introduit dans le premier compartiment avec une vitesse de l'ordre de 2.10⁻⁵ à 2.10⁻¹ m/s.

De préférence, ladite structure bipolaire est destinée à être intégrée dans un générateur électrochimique bipolaire ou un super-condensateur avec au moins une électrode de la structure bipolaire fonctionnant par insertion d'ions lithium ou par phénomène capacitif.

Comme évoqué ci-dessus, la structure selon l'invention est destinée à constituer une « électrode bipolaire » avec un substrat en forme de feuille formant collecteur de courant, ainsi que deux électrodes en forme de couches respectivement agencées sur les surfaces opposées du substrat. De préférence, les électrodes agencées de part et d'autres du collecteur de courant comprennent au moins un liant de type polymérique, un matériau d'électrode, et avantageusement un conducteur électronique tel que du carbone.

Par liant polymérique, on entend de préférence un liant choisi parmi le PVdF, la carboyméthylcellulose, l'acide polyacrylique, etc.

Parmi les matériaux actifs d'électrode positive, on peut citer LiCoO2, LiNi0.8Co0.15A10.05O2, Li_{1,04}Mn_{1,96}O₄ LiMn2O4, LiNi0.33Mn0.33Co0.33O2, LiFePO4, un composé à base de soufre, ou un mélange de ces derniers.

Parmi les matériaux actifs d'électrode négative, on peut citer le TiO2, Li4Ti5O12, le silicium, l'étain, un oxyde de silicium et d'étain, un composé à base de carbone type carbone graphite ou un mélange de ces derniers.

Le collecteur de courant selon l'invention est constitué d'un matériau choisi parmi un ou plusieurs métal(aux), un polymère conducteur électronique ou un matériau composite conducteur électronique. Parmi les métaux, on peut citer l'aluminium, le cuivre, le nickel, ou un mélange cuivre et aluminium.

De préférence la feuille formant le collecteur de courant est en aluminium.

Selon un développement de l'invention, l'électrode bipolaire est calandrée et le test d'étanchéité est pratiqué après calandrage, et avant la mise en place de la structure bipolaire dans une batterie bipolaire.

L'invention a également pour objet une structure bipolaire comportant un substrat en forme de feuille formant collecteur de courant, ainsi que deux électrodes en forme de couches respectivement agencées sur les surfaces opposées du substrat, ladite structure présentant un taux de fuite strictement inférieur à 5.10⁻⁵ Pa.m3/s, et de préférence strictement inférieur à 1.10⁻⁷ Pa.m3/s. Les taux de fuite mentionnés ci-dessus sont préférentiellement ceux observés après calandrage de la structure bipolaire.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1, déjà décrite, représente une vue schématique en coupe d'un générateur électrochimique bipolaire au lithium, intégrant une structure bipolaire destinée à subir un test d'étanchéité selon l'invention ;
- la figure 2 représente une vue schématique en coupe de la structure bipolaire intégrée au générateur de la figure 1 ;
- la figure 3 représente une vue schématique en coupe d'une installation permettant la mise en oeuvre d'un procédé selon un mode de réalisation préféré de la présente invention.

### EXPOSÉ DÉTAILLÉ DE MODES DE RÉALISATION PRÉFÉRÉS

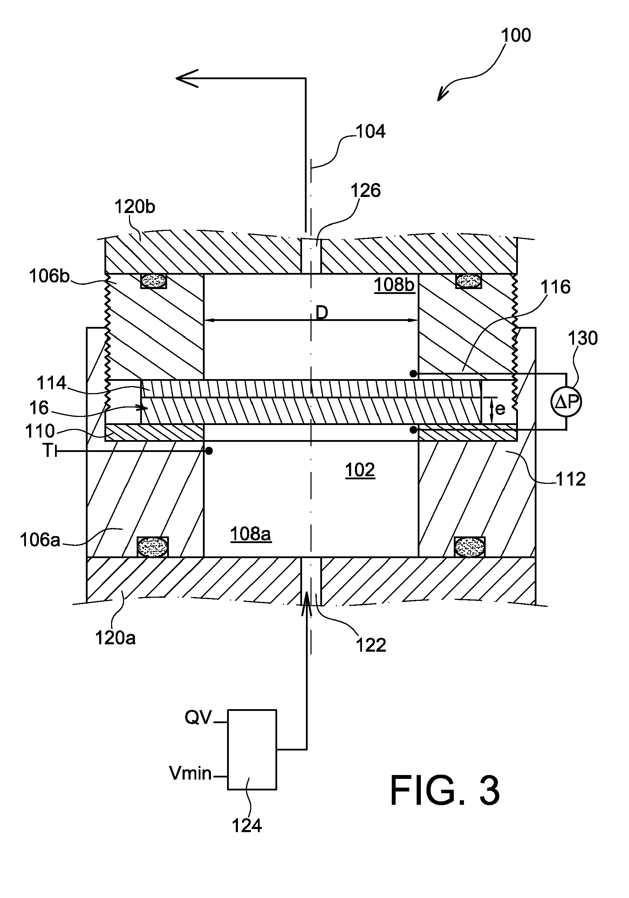

En référence à la figure 3, il est représenté une installation 100 permettant la mise en oeuvre d'un procédé selon un mode de réalisation préféré de la présente invention, visant à tester l'étanchéité de la structure bipolaire 16 montrée sur la figure 2, et également dénommée « électrode bipolaire ».

Cette structure 16 présente une épaisseur « e » comprise 10 et 1000 µm, avec une épaisseur du substrat en aluminium 14 de préférence comprise entre 10 et 70 µm.

L'installation comprend une cavité 102, de préférence de forme cylindrique de section circulaire, centrée sur l'axe 104. Le diamètre D peut être de l'ordre de 16 mm. La cavité 102 est délimitée par deux embouts concentriques 106a, 106b montés l'un sur l'autre, de préférence par vissage. La structure bipolaire 16 à tester est enserrée entre les deux embouts, et délimite de part et d'autre de celle-ci un premier compartiment 108a et un second compartiment 108b de la cavité. Pour ce faire, la périphérie de la structure 16 est reliée de manière étanche à la cavité 102, sur la paroi intérieure de celle-ci. Comme cela est visible sur la figure 3, l'étanchéité est réalisée à l'aide d'un joint 110 écrasé entre une extrémité 112 de l'embout 106a formant épaulement, et la périphérie de la structure 16. De l'autre côté de cette dernière, dans le second compartiment, une grille de support 114 est enserrée entre une extrémité 116 de l'embout 106b formant épaulement, et la périphérie de la structure bipolaire 16. Cette grille est destinée à limiter la déformation de la structure 16 lors du test d'étanchéité, qui sera décrit ci-après.

Le premier compartiment 108a est fermé à l'opposé de la structure bipolaire 16 par une première pièce de fermeture 120a, en appui étanche contre le premier embout 106a. La pièce de fermeture 120a est percée d'une entrée de fluide 122 reliée à une alimentation 124, délivrant de préférence de l'air.

De manière analogue, le second compartiment 108b est fermé à l'opposé de la structure bipolaire 16 par une seconde pièce de fermeture 120b, en appui étanche contre le second embout 106b. La pièce de fermeture 120b est percée d'une sortie de fluide 126, de préférence ouverte à la pression atmosphérique.

Une fois que l'installation 100 montrée sur la figure 3 est obtenue, le procédé de test d'étanchéité est poursuivi par la mise en circulation de l'air dans le premier compartiment 108a, à l'aide de l'alimentation 124. Cela a pour conséquence de plaquer la structure 16 contre la grille 114 agencée en aval.

Cette alimentation en air s'effectue de préférence à un débit Qv de l'ordre 60 à 700 litres/heure, et à une vitesse d'entrée Vmin, dans le premier compartiment, de l'ordre de 2.10⁻⁵ à 2.10⁻¹ m/s.

Ensuite, l'étanchéité / la perméabilité de la structure bipolaire 16 est évaluée à partir d'une mesure de la différence de pression de l'air dans les premier et second compartiments, à l'aide de capteurs appropriés 130.

A titre d'exemple indicatif, la structure bipolaire 16 peut être réputée non-conforme lorsque la différence de pression mesurée passe au-dessous d'une valeur prédéterminée, témoignant d'une quantité non acceptable de gaz rejoignant le second compartiment 108b en empruntant une / des fissures dans l'épaisseur de la structure 16. De telles fissures génèrent en effet un risque de court-circuit ionique à travers le collecteur de courant 14.

La valeur prédéterminée peut être fixée par des abaques, dépendant de préférence d'une pluralité de critères comme l'épaisseur de la structure 16, la porosité de ses couches formant électrodes, la température T mesurée par un capteur dans la cavité, etc.

En cas de non-conformité, la structure bipolaire est alors avantageusement écartée avant de se retrouver dans l'empilement destiné à former le générateur électrochimique.

A titre d'exemple, pour être conforme, la structure bipolaire 16, après calandrage, doit présenter un taux de fuite strictement inférieur à 5.10⁻⁵ Pa.m3/s, et de préférence strictement inférieur à 1.10⁻⁷ Pa.m3/s. De telles électrodes bipolaires sont également objet de la présente invention.

Bien entendu, diverses modifications peuvent être apportées par l'homme du métier à l'invention qui vient d'être décrite, uniquement à titre d'exemples non limitatifs.

## Revendications

1. Procédé de test d'étanchéité d'une structure bipolaire (16) comprenant un substrat (14) en forme de feuille formant collecteur de courant, ainsi que deux électrodes (10, 12) en forme de couches respectivement agencées sur les surfaces opposées du substrat (14), le procédé comprenant les étapes suivantes :
- mise en place de la structure bipolaire (16) dans une cavité (102) de manière à délimiter au sein de celle-ci un premier et un second compartiments (108a, 108b) séparés par cette structure bipolaire dont la périphérie est reliée de manière étanche à la cavité (102) ;
- mise en circulation d'un fluide dans le premier compartiment (108a) de la cavité, en direction du second compartiment (108b) ;
- évaluation de l'étanchéité de la structure bipolaire (16) à partir d'une mesure de la différence de pression du fluide dans les premier et second compartiments.

2. Procédé selon la revendication 1, dans lequel il est prévu une grille de support (114) dans le second compartiment (108b), avec la structure bipolaire (16) plaquée contre cette grille.

3. Procédé selon la revendication 1 ou la revendication 2, dans lequel ladite structure bipolaire (16) présente une épaisseur (e) totale comprise entre 10 et 1000 µm.

4. Procédé selon l'une quelconque des revendications précédentes, dans lequel le fluide est de l'air et est introduit dans le premier compartiment (108a) avec un débit de l'ordre de 60 à 700 litres/heure.

5. Procédé selon l'une quelconque des revendications précédentes, dans lequel le fluide est de l'air et est introduit dans le premier compartiment (108a) avec une vitesse de l'ordre de 2.10⁻⁵ à 2.10⁻¹ m/s.

6. Procédé selon l'une quelconque des revendications précédentes, dans lequel ladite structure bipolaire (16) est destinée à être intégrée dans un générateur électrochimique bipolaire ou un super-condensateur avec au moins une électrode de la structure bipolaire fonctionnant par insertion d'ions lithium ou par phénomène capacitif.

## Patentansprüche

1. Verfahren zum Testen der Dichtigkeit einer bipolaren Struktur (16), umfassend ein Substrat (14) in Form einer Lage, die einen Stromkollektor bildet, sowie zwei Elektroden (10, 12) in Form von Schichten, die jeweils an den gegenüberliegenden Oberflächen des Substrats (14) angeordnet sind, wobei das Verfahren die folgenden Schritte umfaßt:
- Platzieren der bipolaren Struktur (16) in einem Hohlraum (102) derart, dass in seinem Inneren eine erste und eine zweite Kammer (108a, 108b) begrenzt werden, die durch diese bipolare Struktur separiert sind, deren Umfang in dichter Weise mit dem Hohlraum (102) verbunden ist;
- Zirkulieren lassen eines Fluids in der ersten Kammer (108a) des Hohlraums in Richtung der zweiten Kammer (108b);
- Abschätzung der Dichtigkeit der bipolaren Struktur (16) ausgehend von einer Messung der Druckdifferenz des Fluids in der ersten und der zweiten Kammer.

2. Verfahren nach Anspruch 1, bei dem in der zweiten Kammer (108b) ein Stützgitter (114) vorgesehen ist, wobei die bipolare Struktur (16) gegen dieses Gitter gedrückt wird.

3. Verfahren nach Anspruch 1 oder Anspruch 2, bei dem die bipolare Struktur (16) eine Gesamtdicke (e) im Bereich zwischen 10 und 1000 µm aufweist.

4. Verfahren nach einem der vorhergehenden Ansprüche, bei dem das Fluid Luft ist und in die erste Kammer (108a) mit einer Rate in der Größenordnung von 60 bis 700 I/h eingebracht wird.

5. Verfahren nach einem der vorhergehenden Ansprüche, bei dem das Fluid Luft ist und in die erste Kammer (108a) mit einer Geschwindigkeit in der Größenordnung von 2 x 10⁻⁵ bis 2 x 10⁻¹ m/s eingebracht wird.

6. Verfahren nach einem der vorhergehenden Ansprüche, bei dem die bipolare Struktur (16) dazu ausgelegt ist, in einen bipolaren elektrochemischen Generator oder einen Superkondensator integriert zu werden, wobei wenigstens eine Elektrode der bipolaren Struktur durch Einbau von Lithiumionen oder durch ein kapazitives Phänomen funktioniert.

## Claims

1. Method for evaluating the sealing of a bipolar structure (16) including a sheet-like substrate (14) forming a current collector, as well as two electrodes (10, 12) in the form of films arranged on the opposite surfaces of the substrate (14), respectively, the method including the following steps:
- placing the bipolar structure (16) in a cavity (102) so as to define first and second compartments (108a, 108b) therein, which are separated by said bipolar structure, the periphery of which is sealingly connected to the cavity (102);
- circulating a fluid in the first compartment (108a) of the cavity toward the second compartment (108b);
- evaluating the sealing of the bipolar structure (16) from a measurement of the difference in the pressure of the fluid in the first and second compartments.

2. Method according to claim 1, wherein a support grid (114) is provided in the second compartment (108b), with the bipolar structure (16) pressed against said grid.

3. Method according to claim 1 or claim 2, wherein said bipolar structure (16) has a total thickness (e) comprised between 10 and 1000 µm.

4. Method according to any of the preceding claims, wherein the fluid is introduced into the first compartment (108a) with a flow rate of the order of 60 to 700 litres/hour.

5. Method according to any of the preceding claims, wherein the fluid is introduced into the first compartment (108a) with a velocity of the order of 2.10⁻⁵ to 2.10⁻¹ m/s.

6. Method according to any of the preceding claims, wherein said bipolar structure (16) is intended to be integrated in a bipolar electrochemical generator or a super-capacitor with at least one electrode of the bipolar structure operating by insertion of lithium ions or by capacitive phenomenon.
